# NEUE EUROPÄISCHE PATENTSCHRIFT

(11) **EP 1 404 434 B2**
(45) Veröffentlichungstag und Bekanntmachung des Hinweises auf die Entscheidung über den Einspruch: **20.08.2014**
(45) Hinweis auf die Patenterteilung: 06.10.2004
(21) Anmeldenummer: 02753899.0
(22) Anmeldetag: 08.07.2002
(51) Int. Cl.: B01D 46/04

(54) **VERFAHREN UND VORRICHTUNG ZUR ABREINIGUNG VON FILTERN FÜR STAUBBELASTETE ABGASE**
METHOD AND DEVICE FOR CLEANING FILTERS FOR DUST-LADEN WASTE GASES
PROCEDE ET DISPOSITIF POUR LE DEPOUSSIERAGE DE FILTRES DESTINES A DES GAZ D'ECHAPPEMENT CHARGES EN POUSSIERES

(30) Priorität: 12.07.2001 AT 10912001
(43) Veröffentlichungstag der Anmeldung: 07.04.2004
(73) Patentinhaber: Scheuch GmbH, 4971 Aurolzmünster (AT)
(72) Erfinder: SCHEUCH, Alois, A-4910 Ried im Innkreis (AT)
(74) Vertreter: Sonn & Partner Patentanwälte
(86) Internationale Anmeldenummer: PCT/AT2002/000199
(87) Internationale Veröffentlichungsnummer: WO 2003/008069

(56) Entgegenhaltungen:
- EP-A- 0 080 754
- EP-A- 0 813 897
- AT-B- 407 840
- DE-A- 2 831 167
- Produktinformation Informationen über INTENSIV Jet Rückspülfilter-Off Line
- Prospektunterlagen "Jet-Rückspülfilter" 92.131, 92.132, 91.127, 92.134

## Beschreibung

Die Erfindung betrifft ein Verfahren zur Abreinigung von Filtern gemäß dem Oberbegriff des Anspruchs 1. Weiters betrifft die Erfindung eine Vorrichtung zur Abreinigung von Filtern gemäß dem Oberbegriff des Anspruchs 6.

Filter für staubbelastete Abgase werden dort eingesetzt, wo Verunreinigungen, wie Späne, Schnitzel, Fasern oder Stäube von einer Transportluft abgetrennt und entsorgt bzw. einer Wiederverwertung zugeführt werden sollen. Beispiele für Industriezweige wo viel Staub anfällt sind die holzbearbeitende Industrie, die Faserindustrie, die Papierindustrie oder die Mineralstoffindustrie. Die Verunreinigungen werden beispielsweise vom Ort einer Bearbeitungsmaschine abgesaugt und die verunreinigten Abgase, das sogenannte Rohgas, dem Filter zugeführt. Üblicherweise besteht ein Filter aus mehreren Filterelementen, welche als Filterschläuche, Filterpatronen, Filtertaschen oder auch Filterplatten ausgeführt sein können. Das zu reinigende Rohgas durchströmt das Filtermedium von außen nach innen, wobei die Verunreinigungen, insbesondere die Staub- und Aerosolpartikel, an der Außenseite des Filterelements abgeschieden werden. Der gereinigte Gasstrom verlässt das Filterelement durch das oben offene Ende in eine sogenannte Reingaskammer und gelangt durch entsprechende Leitungen zu den nachfolgenden Anlagenkomponenten bzw. in die Atmosphäre.

Im Laufe der Zeit wird der durch die Verunreinigungen gebildete Belag an der Außenwand der Filterelemente, der sogenannte Filterkuchen, immer dicker, weshalb zur Gewährleistung eines kontinuierlichen Betriebes des Filters dieser periodisch abgereinigt werden muss. Zu diesem Zweck wird durch das offene Ende des Filterelements Luft eingeblasen, welche die an der Außenseite anhaftenden Verunreinigungen ablöst. Dabei erfolgt die Abreinigung entweder durch einen länger andauernden Spülluftstrom oder durch einen kurzen heftigen Druckluftimpuls. Die Vorteile des Spülluftverfahrens liegen in einem geringeren Druck des Abreinigungsluftstroms und den damit verbundenen geringen mechanischen Beanspruchungen des Filtermaterials. Nachteilig dabei ist, dass für eine effiziente Entfernung des Filterkuchens große Spülluftmengen erforderlich sind. Darüber hinaus ist das vorhandensein von beweglichen Teilen im Abreinigungsmechanismus nachteilig. Darüber hinaus ist die Abreinigungswirkung, insbesondere bei kritischen bzw. klebrigen Stäuben sowie hohen Schlauchwiderständen, unzureichend. Die erforderlichen hohen volumenströme sowie zusätzliche Maßnahmen, wie beispielsweise das Aufwärmen der Spülluft bei Heißgasfiltration, bedingen weitere wirtschaftliche Nachteile.

Im Gegensatz dazu bringt das Druckluftverfahren die Vorteile mit sich, dass keine bewegten Teile im Abreinigungsmechanismus erforderlich sind und das Verfahren bei kritischen Stäuben und hohen Schlauchwiderständen gut funktioniert und optimale Abreinigungsergebnisse erzielt werden können. Als weitere Vorteile wären geringerer Energiebedarf, geringerer Volumenstrom an Druckluft sowie der Wegfall der Notwendigkeit des Vorwärmens der Abreinigungsluft bei Heißgasfiltration zur Vermeidung von Taupunktsunterschreitungen zu nennen. Nachteilig beim Druckluftverfahren sind die hohen Drücke im Druckluftbehälter sowie die dadurch bedingten hohen mechanischen Belastungen des Filtermediums und die dadurch reduzierte Standzeit der Filterelemente. Darüber hinaus ist durch das Abschleudern der Staubpartikel vom Filterelement ein Ansaugen durch das benachbarte Filterelement wahrscheinlich, weshalb es keine nachhaltige Entfernung des Filterkuchens erreicht wird. Eine Vorrichtung zur Abreingung von Filterschläuchen oder Filterpatronen durch Einblasen von Druckluft in eine Injektordüse wird beispielsweise in der AT 377 711 B beschrieben.

Bei der Abreinigung von Filter der angegebenen Art wird zwischen der sogenannten Online-Abreinigung, welche ohne Abschaltung der Anlage erfolgt, und der sogenannten Offline-Abreinigung, welche während einer kurzzeitigen Unterbrechung des Kreislaufes erfolgt, unterschieden. Bei der Online-Abreinigung wird während des Betriebs der Filteranlage in einzelne Filterelemente Luft eingeblasen bzw. diese mit Druckluftimpulsen beaufschlagt, während die anderen Filterelemente weiterhin ihre Funktion aufrechterhalten.

Da beim Abreinigen eines Filterelements, beispielsweise eines Filterschlauchs, ein Teil der Energie durch das oben offene Ende des Filterelements verlorengeht, wurden Verfahren entwickelt, durch welche höhere Abscheideraten ermöglicht werden, indem die offenen Enden der abzureinigeneden Filterelemente während der Abreinigung zumindest teilweise abgedeckt werden, so dass das abzureinigende Filterelement mehr oder weniger drucklos ist. Eine derartige Vorrichtung zur sukzessiven Abreinigung von Schlauchfiltern wird beispielsweise in der AT 407 840 B beschrieben.

Ein weiteres Verfahren und eine Vorrichtung zum Reinigen eines Staubabscheiders wird durch die AT 405 615 B beschrieben, wobei zur Sicherstellung einer guten Reinigungswirkung die abzureinigenden Filterelemente während der Abreinigung reingasseitig abgesperrt werden und von einem gerichteten Rohgasstrom umströmt werden, so dass der Filterkuchen des abzureinigenden Filterelements durch den Rohgasstrom unterstützt, abgeschleudert wird. Nachteilig bei diesem Verfahren ist, dass das abzureinigende Filterelement während der Abreinigung zu einem bestimmten Ausmaß durch das verunreinigte Rohgas umströmt wird. Dadurch muss der verwendete Druck der Druckluft zur Abreinigung erhöht oder eine schlechtere Abreinigungswirkung in Kauf genommen werden. Durch die Rohgasströmung wird auch der vom abgereinigten Filterelement abgeschleuderte Filterkuchen zu anderen Filterelementen transportiert, wo er wieder angesaugt wird, anstatt dass der Staub auf dem kürzesten Weg in den Staubsammeltrichter fällt.

Ein weiterer Nachteil bekannter Abreinigungsverfahren besteht darin, dass es im Filter bzw. in der Gesamtanlage durch das Zu- und Abschalten der Filterelemente vor und nach der Abreinigung zu Druckschwankungen kommt. Insbesondere beim Zuschalten eines abgereinigten Filterelements bzw. einer Filterkammer, bestehend aus mehreren Filterelementen, welche gerade abgereinigt wurde, kommt es zu starken Druckschwankungen, welche sich auf das ganze System auswirken können. Beispielsweise kann die Regelung des für die Abführung der Reingase zuständigen Ventilators od. dgl. durch die plötzliche Druckänderung außer Tritt geraten. Aufgrund der Trägheit des Ventilators können die Druckschwankungen nicht sofort kompensiert werden, weshalb es auch zu Schwingungen kommen kann. Andererseits kann es auch am Ursprungsort der staubbelasteten Abgase, beispielsweise an einer Bearbeitungsmaschine oder an einer Mühle od. dgl., zu Änderungen der Druckdifferenz zwischen der Filteranlage und der Umgebung kommen, wodurch sogar eine Luftströmung in die entgegengesetzte Richtung der Absauganlage resultieren kann.

Die DE 23 45 722 A1 beschreibt ein Gasfilter, bei dem sich eine Abreinigungsdüse über die gesamte Länge der Mündung der Filterelemente erstreckt und die an einem Düsenwagen befestigt ist, der verschiebbar angeordnet ist. Diese Anordnung umfasst nicht mehrere Filtermodule, welche in einem gemeinsamen Gehäuse angeordnet sind und zeigt keine Maßnahmen zur Minimierung von Druckschwankungen während der Abreinigung von Filtermodulen.

Die DE 27 09 204 A1 beschreibt ein Verfahren zum Reinigen strömender Gase sowie eine Vorrichtung dazu, bei der Druckluft in wenigstens zwei voneinander getrennten Impulsen in die Filterelemente eingeblasen wird, wobei durch den ersten Impuls der Filterkuchen gelockert und durch den nachfolgenden Impuls vom Filterschlauch abgesprengt wird.

Die DE 27 25 438 A1 zeigt ein Verfahren und eine Vorrichtung zur rückschlagfreien Druckluftstoßreinigung von Filterelementen, bei dem an der Mündung des Filterkörpers ein elastisch ausgeführtes Membranventil angeordnet ist. Durch hermetische Abriegelung des offenen Filterschlauchs während der Abreinigung wird zwar erreicht, dass die Druckluft während der Abreinigung voll zur Wirkung kommt, jedoch werden die Druckschwankungen im Filter nicht minimiert.

Schließlich zeigt die DE 28 31 167 A1 ein Filter mit in Kammern angeordneten Filterelementen, wobei während der Abreinigung einer Kammer diese sowohl rohgasseitig als auch reingasseitig abgesperrt wird, wodurch die Abreinigungsintensität verbessert werden kann. Das Schließen sowohl der rohgasseitigen als auch reingasseitigen Klappe macht ein Überströmventil bei der Abreinigung erforderlich, über das der Überdruck in der abgesperrten Kammer abgebaut werden kann. Ein hoher Druck im Gehäuse würde die Abreinigungswirkung eines Druckluftstoßes oder der Spülluft verringern. Diese Konstruktion zeichnet sich durch einen konstruktiven Aufwand aus.

Das Dokument EP-A-0080754 beschreibt ein Reinigungsverfahren von Filtermodulen durch Druckluftstösse, bei dem ein zu reinigendes Filtermodul durch Abschalten der Ableitung des Reingases in einen strömungslosen Zustand gebracht wird.

Das Ziel der vorliegenden Erfindung besteht in der Schaffung eines Verfahrens bzw. einer Vorrichtung zur Abreinigung von Filtern für staubbelastete Abgase, wodurch die Druckschwankungen im System möglichst minimiert werden können, gleichzeitig aber eine nachhaltige Entfernung des Filterkuchens möglich ist, ein möglichst niedriger Druck für die Druckluft zur Abreinigung verwen-det werden kann und ein geringes Volumen an Druckluft verbraucht wird. Der Aufwand für das erfindungsgemäße Verfahren bzw. die Vorrichtung soll möglichst gering sein, so dass auch die Herstellungs- und Installationskosten möglichst gering ausfallen.

Gelöst wird die erfindungsgemäße Aufgabe in verfahrensmäßiger Hinsicht dadurch, dass jeweils zumindest ein Filterelement in einem Filtermodul angeordnet ist, und dass mindestens zwei Filtermodule in einem Gehäuse oder einer Filterkammer angeordnet sind, wobei die Filtermodule abwechselnd abgereinigt werden, wobei das abzureinigende Filtermodul während der Abreinigung in einen im Wesentlichen strömungsfreien Zustand gebracht wird, indem während der Abreinigung die Ableitung des Reingases des abzureinigenden Filtermoduls unterbrochen wird und beim Wechsel der abzureinigenden Filtermodule die Zuschaltung des abgereinigten Filtermoduls und die Abschaltung des abzureinigenden Filtermoduls in die Gasströmung gegengleich erfolgt, wobei etwaige Druckschwankungen im Filter minimiert werden und dass der Verbrauch der bei der Abreinigung verwendeten Druckluft 0,5 bis 4 Liter pro m² Filterfläche beträgt. Durch die Unterteilung des Filters in Filtermodule und dadurch, dass das Filtermodul während der Abreinigung in einen im Wesentlichen strömungsfreien Zustand gebracht wird, kann eine Offline-Abreinigung des Filtermoduls erreicht werden, ohne die Notwendigkeit üblicher Kammerbauweise der Filter, welche einen hohen Aufwand an Zuleitungen, Ableitungen und Trennwänden erfordert. Ein vollständiges Abtrennen der abzureinigenden Filtermodule aus dem Rohgasstrom wird dabei nicht angestrebt, da dies, wie bei der Kammerbauweise, einen höheren baulichen Aufwand bedeutet. Um das notwendige Druckluftvolumen zu minimieren weisen die Druckluftstöße eine Dauer von weniger als 300 ms auf. Unter der Dauer ist die elektrische Öffnungszeit des entsprechenden Ventils für die Druckluftdüse zu verstehen, und nicht die davon üblicherweise geringfügig abweichende mechanische Öffnungszeit des Ventils. Darüber hinaus ist es von Vorteil, dass die Rohgaszuleitung während der Abreinigung eines Filtermoduls offen bleibt, so dass sich die bei der Abreinigung ausbreitende Druckwelle über die Rohgasleitung ausbreiten kann, anstatt dass sich in dem Filtermodul bzw. dem Filtergehäuse ein zu hoher Druck aufbaut. Durch die erfindungsgemäße gegengleiche Zuschaltung des abgereinigten Filtermoduls in die Gasströmung und die Abschaltung des abzureinigenden Filtermoduls in die Gasströmung werden die Druckschwankungen im Filter sowie in der gesamten Anlage minimiert und die gesamte Drucksituation stabilisiert. Als Folge dessen kann zur Abreinigung der Filterelemente Niederdruck verwendet werden und trotzdem eine wirkungsvolle Entfernung des Filterkuchens erreicht werden. Dadurch, dass sich das jeweilige Filtermodul während der Abreinigung in einem im wesentlichen strömungsfreien Zustand befindet, wird die Abreinigung und der Abwurf des Filterkuchens nicht beeinträchtigt und auch die Sedimentation des abgeschleuderten Filterkuchens nicht behindert. Der im Wesentlichen strömungsfreie Zustand des Filtermoduls wird durch eine Unterbrechung der Ableitung des Reingases des abzureinigenden Filtermoduls während der Abreinigung erzielt, was beispielsweise durch herkömmliche Absperrorgane, wie Klappen oder Ventile, erfolgen kann. Infolge der Verwendung von Druckluftstößen im Niederdruckbereich wird die für die Druckluftstöße erforderliche Energie minimiert und auch das Volumen der verbrauchten Druckluft gering gehalten. Weiters ist durch die Modulbauweise ein geringerer technischer Aufwand und somit geringere Herstellungskosten verbunden. Als weitere Folge der stabilen Druckverhältnisse ist auch der Anfall der Stäube relativ gleichmäßig, was sich auf die nachfolgende Behandlung desselben positiv auswirkt, da beispielsweise die Austrageorgane, wie z.B. Förderschnecken oder Fördereinrichtungen, nicht unterschiedlich belastet werden und somit nicht unterschiedlich angesteuert werden müssen. Die Reihenfolge der Abreinigung der Filtermodule kann beliebig gewählt werden. Die Filterelemente innerhalb des Filtermoduls können entweder gleichzeitig oder ebenfalls hintereinander mit Druckluftstößen versehen werden, wobei bei einer großen Anzahl von Filterelementen die Reihenfolge ebenfalls beliebig sein kann.

Zur Abreinigung werden Druckluftstöße mit einem Speicher- bzw. Vorlagedruck von 0,5 bis 3 bar, vorzugsweise 0,8 bis 2 bar, verwendet. Bei dieser Art der Abreinigung beträgt das Druckluftvolumen pro Abreinigungsimpuls vorzugsweise 0,5 bis 4 Liter pro m² Filterfläche. Vergleichweise wird im herkömmlichen Online-Betrieb mit Speicherdrücken von 3 bis 10 bar gearbeitet. Dabei beträgt der Druckluftverbrauch pro Impuls 4 bis 20 Liter pro m² Filterfläche. Der jeweilige Druck der Druckluftstöße hängt von der jeweiligen Länge der Filterelemente ab. Die angegebenen Werte sind für Filterschläuche mit einer Länge von über 4 m typisch. Unter Speicher- bzw. Vorlagedruck wird der Druck im Druckluftbehälter bzw. in der Druckluftversorgungsleitung verstanden und nicht der Druck an der Düse oberhalb des offenen Endes des Filterelements, welcher in der Regel wesentlich geringer als der Speicher- bzw. Vorlagedruck ist. Neben den geringeren Energiekosten werden durch die niedrigeren Druckwerte auch die Filterelemente geschont und die Druckschwankungen im Filter bzw. im gesamten System reduziert.

Um einerseits die Energie weiter zu verringern und andererseits die Belastung der Filterelemente möglichst gering zu halten, wird zur Abreinigung jedes Filtermoduls je Abreinigungszyklus jeweils nur ein Druckluftstoß für jedes Filterelement des Filtermoduls verwendet.

Um eine optimale Abreinigungswirkung zu erzielen, ist vorgesehen, dass die Druckluftstöße in Richtung der Filterelemente gelenkt werden. Dies kann baulich durch bestimmte Maßnahmen, wie z.B. Druckluftdüsen oberhalb des offenen Endes des Filterelements oder im offenen Ende des Filterelements angeordnete Injektoren od. dgl., erreicht werden.

Wenn das abzureinigende Filtermodul eine bestimmte Zeitspanne nach der Abreinigung in dem im Wesentlichen strömungsfreien Zustand belassen wird, kann die Sedimentation des abgeschleuderten Filterkuchens verbessert und unterstützt werden, da ein neuerliches Ansaugen der zum Staubsammeltrichter herabsinkenden Verunreinigungen verhindert wird, wenn den Verunreinigungen genügend Zeit zum Absinken in den Staubsammeltrichter gegeben wird.

Gelöst wird die erfindungsgemäße Aufgabe auch durch eine Vorrichtung zur Abreinigung von Filtern für staubbelastete Abgase mit mehreren in einem Filtergehäuse vertikal angeordneten Filterelementen mit einem oberen, offenen Ende und einem unteren, geschlossenen Ende mit zumindest einer Zuleitung für die staubbelasteten Abgase und zumindest einer Ableitung für die gereinigten Abgase sowie einer Einrichtung zum Einblasen von Druckluftstößen in das offene Ende der Filterelemente, wobei das Filter in mehrere Filtermodule mit jeweils zumindest einem Filterelement unterteilt ist, wobei mindestens zwei Filtermodule in einem Filtergehäuse oder einer Filterkammer angeordnet sind, wobei die Filtermodule abwechselnd abgereinigt werden, und dass jedem Filtermodul jeweils eine Ableitung für das Reingas zugeordnet ist, in welcher Ableitung ein Absperrorgan zur Unterbrechung der Ableitung des Reingases vorgesehen ist, und weiters eine Einrichtung zur Steuerung der Absperrorgane vorgesehen ist, so dass beim Wechsel der abzureinigenden Filtermodule die Öffnung des Absperrorgans des bereits abgereinigten Filtermoduls und die Schließung des Absperrorgans des abzureinigenden Filtermoduls gegengleich erfolgt, wobei etwaige Druckschwankungen im Filter minimiert werden, wobei die Einrichtung zum Einblasen der Druckluftstöße mit einem Druckluftvolumen pro Abreinigungsimpuls von 0,5 bis 4 Liter pro m² Filterfläche ausgebildet ist. Wenn der Reingasstrom unterbrochen wird, ist das zugehörige Filtermodul nicht durch die Rohgasströmung umströmt, wodurch ein geringerer Druck zur Abreinigung des Filterelements möglich wird, ohne dass die Abreinigungswirkung verschlechtert wird. Erst durch diese Maßnahme ist es möglich, das Abreinigungsverfahren mittels Druckluftimpulse im Niederdruckbereich, d.h. zwischen 0,5 und 3 bar zu verwenden und gleichzeitig hohe Abscheideraten zu erzielen. Dadurch, dass sich das abzureinigende Filterelement in einem im Wesentlichen strömungsfreien Zustand befindet, wird die Abschleuderung des Filterkuchens vom Filterelement, insbesondere von der Außenwand des Filterschlauches nicht behindert und der Filterkuchen kann im Wesentlichen auf den kürzesten Weg nach unten in den Staubsammeltrichter fallen, ohne dass er durch die Rohgasströmung zu benachbarten Filterelementen befördert wird und sich dort wiederum ablagert. Die Vorteile davon sind, dass die Abreinigung nicht gegen den Strömungsdruck des Rohgases erfolgen muss und somit bei geringerem Druck und mit einem geringeren Volumenstrom stattfinden kann. Dadurch kann eine nachhaltige Entfernung des Staubkuchens erzielt werden. Im Gegensatz zu bekannten Filterkammern wird durch die vorliegende Erfindung der bauliche Aufwand durch die Unterteilung in Filtermodule reduziert. Darüber hinaus ist durch die gegengleiche Öffnung des Absperrorgangs des bereits abgereinigten Filtermoduls und die Schließung des Absperrorgangs des abzureinigenden Filtermoduls eine Minimierung der resultierenden Druckschwankungen im Filter bzw. im Gesamtsystem verbunden.

Gemäß einer Ausführungsvariante besteht jedes Filtermodul aus einer den Reingasraum bildenden Kammer mit einer Verbindung zur Ableitung für das Reingas sowie einer Verbindung für das zumindest eine Filterelement. Eine derartige Ausführungsform besteht aus wenigen konstruktiven Teilen und kann sehr rasch und einfach in bestehende Filtergehäuse integriert und eingesetzt werden. Dadurch können die Kosten im Gegensatz zu bekannten Filterkammern deutlich reduziert werden.

Die Vorteile werden weiter verstärkt, wenn zwischen den oder einigen im Filtergehäuse angeordneten Filtermodulen Trennelemente angeordnet sind. Dadurch kann der strömungslose Zustand des abzureinigenden Filtermoduls leichter erreicht werden, und darüber hinaus ein Anhaften des Filterkuchens an Filterelementen benachbarter Filtermodule im Filtergehäuse verhindert werden.

Um eine Lenkung der Druckluftstöße in die offenen Enden der Filterelemente zu erzielen, ist gemäß einem weiteren Merkmal der Erfindung über dem offenen Ende jedes Filterelements zumindest eine in Richtung des Filterelements orientierte Düse angeordnet.

Noch bessere Verhältnisse werden dadurch geschaffen, dass über dem offenen Ende jedes Filterelements zwei in Richtung des Filterelements orientierte Düsen außermittig angeordnet sind.

Weitere Verbesserungen der Abreinigungswirkung können dadurch geschaffen werden, dass im offenen Ende jedes Filterelements ein Injektor angeordnet ist. Durch die verbesserten Strömungsverhältnisse können wiederum Druckluftstöße mit niedrigerem Druck verwendet werden, wodurch einerseits Energie gespart wird und andererseits die Filterelemente geschont werden können.

Vorteilhafterweise ist dabei die zumindest eine Düse über dem offenen Ende jedes Filterelements von der Eintrittsöffnung des Injektors beabstandet.

Wenn gemäß einem weiteren Merkmal der Erfindung die zumindest eine Zuleitung für die Abgase unterhalb dem unteren Ende der Filterelemente der Filtermodule angeordnet ist, wird durch Absperren der Reingasleitung ein im Wesentlichen strömungsloser Zustand des abzureinigenden Filtermoduls erzielt, ohne dass mehrere Rohgaszuleitungen je Filtermodul erforderlich sind.

Die Vorteile des erfindungsgemäßen Verfahrens bzw. beispielshafter Vorrichtungen zur Durchführung des Verfahrens werden anhand der beigefügten Zeichnungen näher erläutert.

Darin zeigen:
Fig. 1 eine schematische Ansicht einer Ausführungsform eines Filtermoduls;
Fig. 2 eine Ausführungsform eines Filters in geschnittener Darstellung;
Fig. 3 eine Variante eines Filters in Schnittbilddarstellung;
Fig. 4 eine weitere Variante eines Filters in geschnittener Darstellung; und
Fig. 5 Zeitdiagramme der Absperrorgane der Filtermodule eines Filters zur Veranschaulichung der Zeitabläufe.

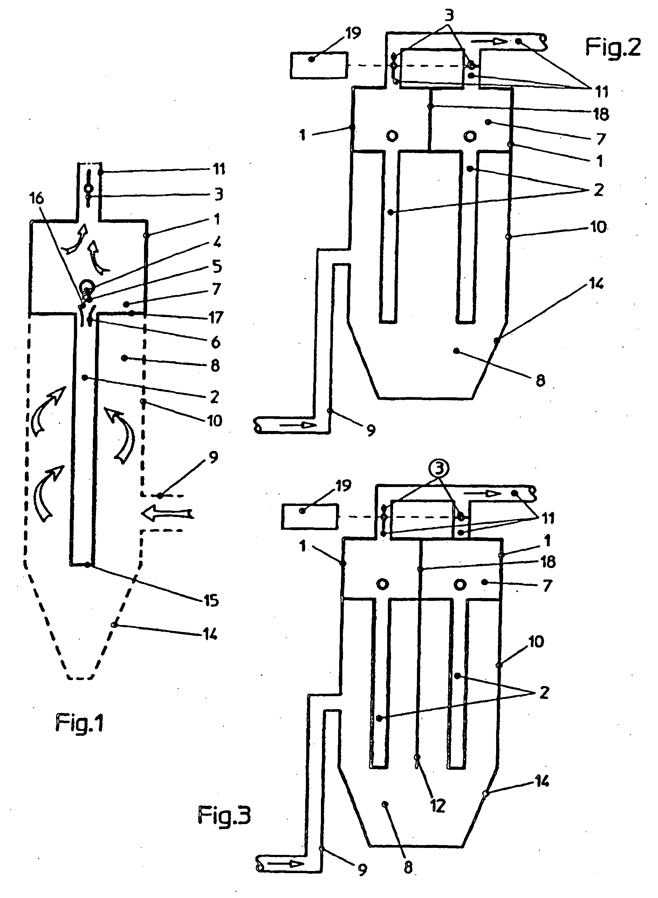

Fig. 1 zeigt ein Filtermodul 1, in dem zumindest ein Filterelement 2 in Form eines Filterschlauchs angeordnet ist. Üblicherweise sind in einem Filtermodul 1 eine Reihe von Filterelementen 2 oder sogar mehrere Reihen von Filterelementen 2 angeordnet. Jedes Filterelement 2 ist vertikal angeordnet und besitzt ein geschlossenes, unteres Ende 15 sowie ein offenes, oberes Ende 16. Jedes Filterelement 2 ist in eine Öffnung einer Platte 17 eingehängt, welche den Rohgasraum 8 vom Reingasraum 7 trennt, und wird von außen nach innen vom Rohgasstrom, welcher über eine Zuleitung 9 in das Filtergehäuse 1 eingebracht wird, durchströmt. Die im Rohgasstrom enthaltenen Verunreinigungen bleiben an der Außenwand der Filterelemente 2 haften und bilden einen mit der Zeit anwachsenden Filterkuchen. Das gereinigte Rohgas gelangt über das obere, offene Ende 16 des Filterelements 2 in den Reingasraum 7 und von dort über eine entsprechende Ableitung 11 an weiterführende Anlagenteile bzw. in die Atmosphäre. Zur Abreinigung des Filterkuchens am Filterelement 2 befindet sich über jeweils eine Reihe von Filterelementen 2 ein Treibstrahlrohr 4, wobei das Treibstrahlrohr 4 über ein Absperrventil 4a mit dem entsprechenden Druckluftbehälter 4b verbunden ist. Dieser Druckluftbehälter ist der Speicher- bzw. Vorlagebehälter. Das Treibstrahlrohr 4 weist über jedem offenen Ende 16 jedes Filterelements 2 eine Öffnung in Form einer oder mehrerer Düsen 5 auf. Aus dieser Düse 5 expandiert beim Abreinigungsvorgang ein Druckluftstrahl über den Reingasraum 7 in einen optional eingesetzten Injektor 6 in das Innere des Filterelements 2. Der Austritt der Druckluft aus der Düse 5 erzeugt eine Druckwelle entlang der Längsachse der Filterelemente 2 in Richtung des geschlossenen Endes 15. Im Injektor 6 kommt es zu einer Mischung der Primärluft und Sekundärluft durch Impulsaustausch. Gleichzeitig erfährt diese Mischung im Injektor 6 eine Druckerhöhung. Der Austritt der aus Primär- und Sekundärluft bestehenden Mischluft aus dem Injektor 6 erzeugt eine Druckwelle entlang der Längsachse der Filterelemente 2 in Richtung des geschlossenen Endes 15 der Filterelemente 2. Dort kommt es zunächst zu einem Druckstau, da die Abreinigungsluft auf den häufig von einer Metallkappe geschützten, geschlossenen Endes 15 der Filterelemente 2 aufprallt und von dort zurückgeworfen wird. Die rücklaufende Druckwelle bläht die Filterelemente 2 auf. Durch den plötzlich auftretenden Druckwechsel und die Umkehr der Strömungsrichtung wwerden die Filterelemente 2 samt Filterkuchen nach außen beschleunigt, und es kommt bei Erreichen der Maximalausdehnung des Filterelements 2 zu einer plötzlichen Verzögerung, wodurch sich der Filterkuchen von der Außenwand der Filterelemente 2 ablöst und dieses abplatzt. Der abgeworfene Filterkuchen fällt in ein an das das Filtermodul 1 umgebenden Filtergehäuse 10 unten angeschlossenen Staubsammeltrichter 14 und wird dort beispielsweise durch eine Förderschnecke abtransportiert. Bei einer Anordnung mehrerer Reihen von Filterelementen 2 innerhalb des Filtermoduls 1 können diese gleichzeitig oder auch mit geringen Zeitverzögerungen von beispielsweise 3 Sekunden mit Druckluftimpulsen beaufschlagt werden. Dabei ist es von Vorteil, wenn nicht eine Reihe von Filterelementen 2 nach der anderen Reihe von Filterelementen 2, sondern die Reihenfolge gemischt wird, so dass die Sedimentation unterstützt wird.

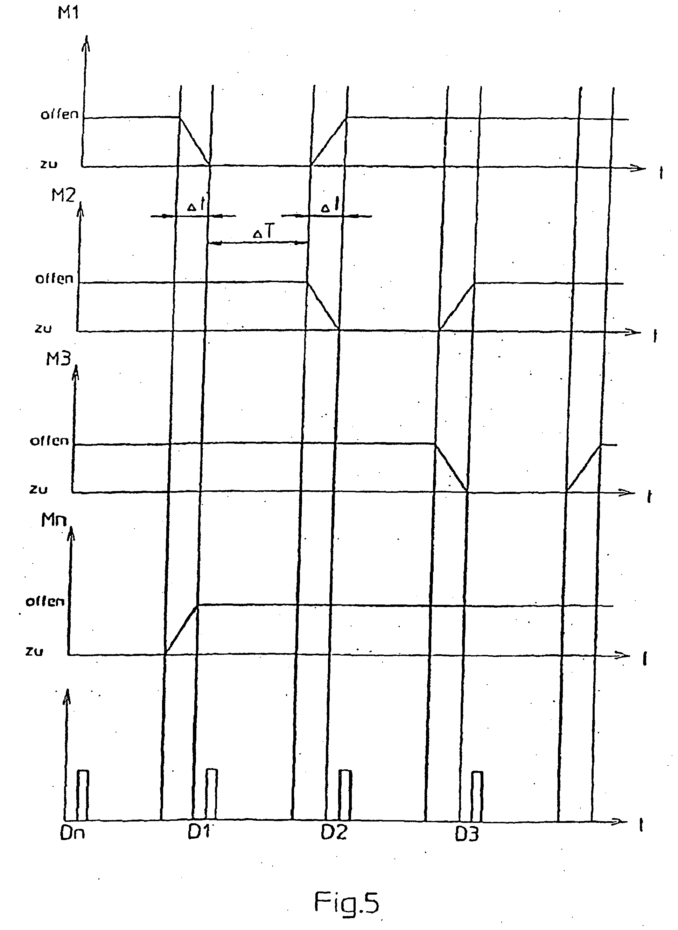

Fig. 2 zeigt eine Ausführungsform der Erfindung in geschnittener Seitenansicht, wobei zwei Filtermodule 1 mit jeweils mindestens einem Filterelement 2 innerhalb eines Filtergehäuses 10 angeordnet sind. Dabei können aufgrund der in Fig. 1 beschriebenen Bauweise der Filtermodule 1 bestehende Filtergehäuse 10 verwendet werden und die Filtermodule 1 in diese rasch und einfach eingesetzt werden. In den Rohgasraum 8 des Filters wird über eine Zuleitung 9 das Rohgas zugeführt. An die oberen, offenen Enden 16 der Filterelemente 2 schließt der Reingasraum 7 an, der durch eine Trennwand 18 unterteilt ist. Von jedem Teil des Reingasraumes 7 verläuft eine Ableitung 11 für die Reinluft zu weiteren Anlagenkomponenten bzw. in die Atmosphäre weiter. In jeder Ableitung 11 ist ein Absperrorgan 3 zur Unterbrechung der Ableitung des Reingases vorgesehen. Die Absperrorgane 3 der Ableitungen 11 sind mit einer Steuerungseinrichtung 19 verbunden. Diese meist durch einen Computer gebildete Einrichtung 19 steuert bzw. regelt die Öffnung und Schließung der Absperrorgane 3 aller Filtermodule 1. Erfindungsgemäß wird das abzureinigende Filtermodul 1 zumindest während der Abreinigung in einen strömungsfreien Zustand geschaltet, indem das Absperrorgan 3 der entsprechenden Ableitung 11 geschlossen wird. Dadurch ist die Strömung vom Rohgasraum 8 zur Reingasseite unterbrochen und das zugehörige Filtermodul 1 befindet sich im strömungslosen Zustand. Um eine optimale Sedimentation des abgereinigten Filterkuchens der Filterelemente 2 des abgereinigten Filtermoduls 1 zu erzielen, kann das Absperrorgan 3 auch eine gewisse Zeitspanne nach der erfolgten Abreinigung geschlossen bleiben, wodurch das zu Bodensinken des Filterkuchens zum Staubsammeltrichter 14 erleichtert wird. Nach erfolgter Abreinigung der Filterelemente 2 des jeweiligen Filtermoduls 1 wird ein weiteres Filtermodul 1 abgereinigt, während das bereits abgereinigte Filtermodul 1 wieder für die Filterung zur Verfügung steht und somit ein kontinuierlicher Betrieb des Filters aufrechterhalten werden kann. Erfindungsgemäß wird die Öffnung des Absperrorgans 3 des bereits abgereinigten Filtermoduls 1 und die Schließung des Absperrorgans 3 des abzureinigenden Filtermoduls 1 gegengleich gesteuert, so dass etwaige Druckschwankungen im Filter minimiert werden. Durch die in der Einrichtung 19 implementierte Steuerung wird erreicht, dass immer genau ein Filtermodul zur Abreinigung aus der Gasströmung weggeschaltet ist und sich somit keine Druckschwankungen im System negativ auswirken können. Zur Erläuterung der zeitlichen Abläufe wird auf die Zeitdiagramme in Fig. 5 und die zugehörige Beschreibung verwiesen.

Fig. 3 zeigt eine Variante eines erfindungsgemäßen Filters, bei der im Rohgasraum 8 eine Trennwand 12 zwischen den Filtermodulen 1 bzw. den Reihen der Filterelemene 2 der Filtermodule 1 vorgesehen ist. Diese Trennwand 12 verhindert das Ansaugen des Filterkuchens von der benachbarten Reihe an Filterelementen 2 und erleichtert die Sedimentation des abgereinigten Filterkuchens in Richtung des Staubsammeltrichters 14. Dennoch ist durch eine einzige Zuleitung 9 für das Rohgas der bauliche Aufwand gering im Gegensatz zu herkömmlichen Bauweisen von Filtern in Form einzelner Kammern, wobei jede Filterkammer über alle notwendigen baulichen Einrichtungen verfügen muss. Bei einer größeren Anzahl von Filtermodulen 1 innerhalb eines Filtergehäuses 10 müssen nicht zwischen allen Filtermodulen 1 Trennwände angeordnet sein, sondern auch nur zwischen einigen der Filtermodule 1.

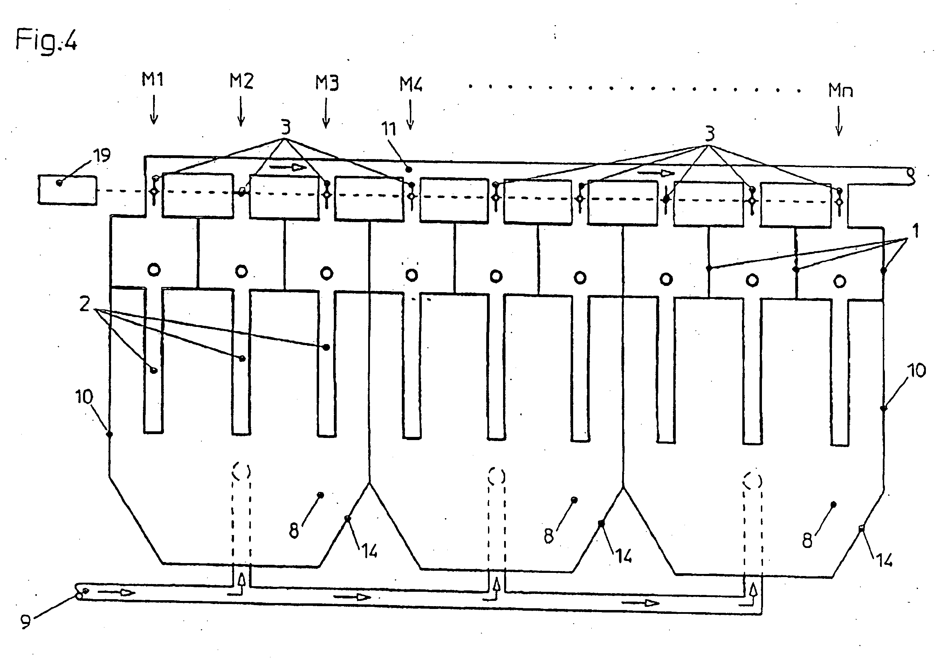

Fig. 4 zeigt eine weitere Variante eines Filters in geschnittener Darstellung, wobei in einem in drei Kammern unterteilcen Filtergehäuse 10 Filtermodüle 1 entsprechend Fig. 1 eingesetzt wurden. In jeder Filterkammer werden drei Filtermodule 1 eingesetzt. Jedes Filtermodul 1 kann aus einem Filterelement 2 oder Reihen von Filterelementen 2 bestehen. Die Ableitungen 11 für die Reinluft werden zu einer gemeinsamen Leitung zusammengefasst. Darüber hinaus sind allerdings keine aufwendigen Montagearbeiten erforderlich. Die Absperrorgane 3 in den Ableitungen 11 jedes Filtermoduls 1 sind zur Steuerung bzw. Regelung mit einer Einrichtung 19 verbunden, welche beispielsweise durch einen Rechner realisiert sein kann. Im dargestellten Beispiel ist das Absperrorgan 3 des zweiten Filtermoduls 1 mit der Bezeichnung M2 abgesperrt, so dass die Filterelemente 2 des Filtermoduls M2 im strömungslosen Zustand sind. Auf das Treibstrahlerrohr 4 über den Filterelementen 2 des Filtermoduls M2 wird ein Druckluftimpuls in die Filterelemente 2 geschickt, und das Absperrorgan 3 eine gewisse Zeitspanne in geschlossener Position gehalten, so dass der vom Filterelement 2 abgeschleuderte Filterkuchen in den Staubsammeltrichter 14 sinken und von dort abtransportiert werden kann. In der Folge wird das Absperrorgan 3 des Filtermoduls M3 geschlossen und gleichzeitig gegengleich das Absperrorgan 3 des Filtermoduls M2 geöffnet. Die Reihenfolge der Abreinigung der Filtermodule 1 muss nicht zwingend hintereinander erfolgen, sondern kann auch über alle Filtermodule 1 des Filters nach einem bestimmten Schema verteilt werden. Die Zeitverläufe dieses Abreinigungsvorgangs gemäß Fig. 4 sind in Fig. 5 näher erläutert.

Fig. 5 zeigt Zeitdiagramme für die Steuerung der Absperrorgane 3 von n Filtermodulen 1 in einem Filter. Das Filtermodul M1 wird zu einem bestimmten Zeitpunkt durch Schließen des Absperrorgans 3 aus dem Rohgasstrom geschaltet bzw. in einen im Wesentlichen strömungsfreien Zustand gebracht. Die Schließung des Absperrorgans 3 des Filtermoduls M1 erfolgt während einer Zeitspanne Δt wie im obersten Zeitdiagramm in Fig. 5 dargestellt. Die Absperrorgane können beispielsweise durch Tellerventile oder Absperrklappen realisiert werden, welche mit einer Steuerungseinrichtung 19 verbunden sind. Es sei angemerkt, dass der Vorgang des Öffnens bzw. Schließens der Absperrorgane 3 nicht zwingend, wie dargestellt, linear sein muss, sondern in der Regel von der Linearität abweichen wird. Sobald das Filtermodul M1 in einen im Wesentlichen strömungsfreien Zustand gebracht wurde, wird ein Druckluftimpuls in das bzw. die Filterelement(e) 2 des Filtermoduls M1 geschickt. Der Druckluftimpuls für die Filterelemente;des Filtermoduls M1 ist im untersten Zeitdiagramm der Fig. 5 mit D1 gekennzeichnet. Nach der Abreinigung des Filtermoduls M1 wird dieses noch eine gewisse Zeit im strömungsfreien Zustand belassen, so dass die Sedimentation des abgeschleuderten Filterkuchens erleichtert wird. Danach wird das Filtermodul M1 durch entsprechendes Öffnen des zugehörigen Absperrorgans wieder in die Rohgasströmung eingebracht bzw. der im Wesentlichen strömungsfreie Zustand aufgehoben. Diese Öffnung des Absperrorgans erfordert wiederum eine gewisse Zeitspanne Δt. Während der Öffnung des Absperrorgans des Filtermoduls M1 wird das Absperrorgan eines anderen Filtermoduls M2 gegengleich geschlossen, so dass ein gleitender Übergang der Filtermodule resultiert und Druckschwankungen im System reduziert werden. Gewisse Toleranzen im zeitlichen Verlauf der Absperrorgane sind dabei natürlich zulässig. Sobald sich das Filtermodul M2 im strömungsfreien Zustand befindet, wird ein Druckluftimpuls D2 in die Filterelemente des Filtermoduls M2 geschickt und nach Ablauf einer gewissen Phase zur Unterstützung der Sedimentation das Absperrorgan des Filtermoduls M2 wieder geöffnet. Gleichzeitig mit der Öffnung des Absperrorgans des Filtermoduls M2 wird das Absperrorgan eines weiteren Filtermoduls M3 geschlossen und danach dieses Filtermodul M3 abgereinigt. Dieses Verfahren wird bis zum letzten Filtermodul Mn fortgesetzt und nach Abreinigung des Filtermoduls Mn beispielsweise wieder mit dem Filtermodul M1 fortgefahren. Wie bereits oben erwähnt, ist die Reihenfolge der Abreinigung der Filtermodile M1 bis Mn beliebig. Auf geänderte Verhältnisse, beispielsweise höheren Anfall staubbelasteter Abgase kann durch eine Reduzierung der Zeitintervalle zwischen den Absperrungen der einzelnen Filtermodule ΔT reagiert werden. Durch die erfindungsgemäße Steuerung der Absperrorgane der einzelnen Filtermodule M1 bis Mn wird ein gleichmäßiger Druckzustand im gesamten System erreicht. Darüber hinaus ist durch den stabilen Druckzustand im System ein regelmäßiger Anfall an Verunreinigungen verbunden, wodurch die Austragsorgane gleichmäßig mit abgereinigtem Material beschickt werden und die Austragorgane, wie z.B. Förderschnecken, nicht mit aufwendigen Steuereinrichtungen versehen werden müssen.

## Patentansprüche

1. Verfahren zur Abreinigung von Filtern für staubbelastete, Abgase, mit mehreren vertikal angeordneten Filterelementen mit einem oberen, offenen und einem unteren, geschlossenen Ende, wobei die Abgase von außen durch die Filterelemente strömen und die gereinigten Abgase durch deren offene Enden abgeführt werden, und zur Abreinigung in das offene Ende der abzureinigenden Filterelemente Druckluftstöße mit einer Dauer von weniger als 300 ms eingeblasen werden, **dadurch gekennzeichnet, dass** jeweils zumindest ein Filterelement in einem Filtermodul angeordnet ist, und dass mindestens zwei Filtermodule in einem Gehäuse oder einer Filterkammer angeordnet sind, wobei die Filtermodule abwechselnd abgereinigt werden, wobei das abzureinigende Filtermodul während der Abreinigung in einen im Wesentlichen strömungsfreien Zustand gebracht wird, indem während der Abreinigung die Ableitung des Reingases des abzureinigenden Filtermoduls unterbrochen wird und beim Wechsel der abzureinigenden Filtermodule die Zuschaltung des abgereinigten Filtermoduls und die Abschaltung des abzureinigenden Filtermoduls in die Gasströmung gegengleich erfolgt, wobei etwaige Druckschwankungen im Filter minimiert werden, und dass der Verbrauch der bei der Abreinigung verwendeten Druckluft 0,5 bis 4 Liter pro m² Filterfläche beträgt.

2. Verfahren nach Anspruch 1, **dadurch gekennzeichnet, dass** zur Abreinigung Druckluftstöße mit einem Speicher- bzw. Vorlagedruck von 0,5 bis 3 bar, vorzugsweise gaz bis 2 bar verwendet werden.

3. Verfahren nach Anspruch 1 oder 2, **dadurch gekennzeichnet, dass** zur Abreinigung jedes Filtermoduls je Abreinigungszyklus jeweils ein Druckluftstoß für jedes Filterelement des Filtermoduls verwendet wird.

4. Verfahren nach einem der Ansprüche 1 bis 3, **dadurch gekennzeichnet, dass** die Druckluftstöße in Richtung der Filterelemente gelenkt werden.

5. Verfahren nach einem der Ansprüche 1 bis 4, **dadurch gekennzeichnet, dass** das abzureinigende Filtermodul eine bestimmte Zeitspanne nach der Abreinigung in dem im Wesentlichen strömungsfreien Zustand belassen wird.

6. Vorrichtung zur Abreinigung von Filtern für staubbelastete Abgase nach dem Verfahren gemäß Anspruch 1 bis 5, mit mehreren, in einem Filtergehäuse (10) vertikal angeordneten Filterelementen (2) mit einem oberen, offenen Ende (16) und einem unteren, geschlossenen Ende (15), mit zumindest einer Zuleitung (9) für die staubbelasteten Abgase und zumindest einer Ableitung (11) für die gereinigten Abgase sowie einer Einrichtung (4) zum Einblasen von Druckluftstößen mit einer Dauer von weniger als 300 ms in das offene Ende (6) der Filterelemente (2),**dadurch gekennzeichnet, dass** das Filter in mehrere Filtermodule (1) mit jeweils zumindest einem Filterelement (2) unterteilt ist, wobei mindestens zwei Filtermodule (1) in einem Filtergehäuse (10) oder einer Filterkammer angeordnet sind, wobei die Filtermodule (1) abwechselnd abgereinigt werden, und dass jedem Filtermodul (1) jeweils eine Ableitung (11) für das Reingas zugeordnet ist, in welcher Ableitung (11) ein Absperrorgan (3) zur Unterbrechung der Ableitung (11) des Reingases vorgesehen ist, und dass weiters eine Einrichtung (19) zur Steuerung der Absperrorgane (3) vorgesehen ist, sodass beim Wechsel der abzureineigenden Filtermodule (1) die Öffnung des Absperrorgans (3) des bereits abgereinigten Filtermoduls (1) und die Schließung des Absperrorgans (3) des abzureinigenden Filtermoduls (1) gegengleich erfolgt, wobei etwaige Druckschwankungen im Filter minimiert werden, wobei die Einrichtung (4) zum Einblasen der Druckluftstöße mit einem Druckluftvolumen pro Abreinigungsimpuls von 0,5 bis 4 Liter pro m² Filterfläche ausgebildet ist.

7. Vorrichtung nach Anspruch 6, **dadurch gekennzeichnet, dass** jedes Filtermodul (1) aus einer den Reingasraum (7) bildenden Kammer mit einer Verbindung zur Ableitung (11) für das Reingas sowie einer Verbindung für das zumindest eine Filterelement (2) besteht.

8. Vorrichtung nach Anspruch 6 oder 7, **dadurch gekennzeichnet, dass** zwischen den oder einigen im Filtergehäuse (1) angeordneten Filtermodule (1) Trennelemente (12) angeordnet sind.

9. Vorrichtung nach einem der Ansprüche 6 bis 8, **dadurch gekennzeichnet, dass** über dem offenen Ende (16) jedes Filterelements (2) zumindest eine in Richtung des Filterelements (2) orientierte Düse (5) angeordnet ist.

10. Vorrichtung nach Anspruch 9, **dadurch gekennzeichnet, dass** über dem offenen Ende (16) jedes Filterelements (2) zwei in Richtung des Filterelements (2) orientierte Düsen (5) außermittig angeordnet sind.

11. Vorrichtung nach einem der Ansprüche 6 bis 10, **dadurch gekennzeichnet, dass** im offenen Ende (16) jedes Filterelements (2) ein Injektor (6) angeordnet ist.

12. Vorrichtung nach Anspruch 11, **dadurch gekennzeichnet, dass** die zumindest eine Düse (5) über dem offenen Ende (16) jedes Filterelements (2) von der Eintrittsöffnung des Injektors (6) beabstandet ist.

13. Vorrichtung nach einem der Ansprüche 6 bis 12, **dadurch gekennzeichnet, dass** die zumindest eine Zuleitung (9) für die Abgase unterhalb dem unteren Ende (15) der Filterelemente (2) der Filtermodule (1) angeordnet ist.

## Claims

1. A method for dedusting filters for dust-laden waste gases, including several vertically arranged filter elements each having an upper, open end and a lower, closed end, wherein the waste gases flow through the filter elements from outside and the cleaned waste gases are discharged through the open ends of the same, and wherein for dedusting compressed-air blasts of a duration of less than 300 ms are blown into the open ends of the filter elements to be dedusted, **characterised in that** at least one filter element is each arranged in a filter module and at least two filter modules are each arranged in a housing or filter chamber, wherein the filter modules are alternately dedusted with the filter module to be dedusted being set in a substantially flow-free state during dedusting by interrupting, during dedusting, the clean-gas discharge duct of the filter module to be dedusted and effecting the connection of the dedusted filter module to, and the disconnection of the filter module to be dedusted from, the gas flow in a diametrically opposed manner at a change-over of the filter modules to be dedusted, thus enabling the minimization of any possible pressure fluctuations in the filter, and that the consumption of the compressed air used for dedusting is 0.5 to 4 liters per m² of filter area.

2. The method according to claim 1, **characterised in that** compressed-air blasts at a reservoir or receiver pressure of 0.5 to 3 bar, preferably 0.8 to 2 bar, are used for dedusting.

3. The method according to claims 1 or 2, **characterised in that** for the dedusting of each filter module one compressed-air blast is each used per dedusting cycle for each of the filter elements of the filter module.

4. The method according to any one of claims 1 to 3, **characterised in that** the compressed-air blasts are directed in the direction of the filter elements.

5. The method according to any one of claims 1 to 4, **characterised in that** the filter module to be dedusted is left in the substantially flow-free state for a certain period of time after dedusting.

6. A device for dedusting filters for dust-laden waste gases according to the method set forth in claims 1 to 5, including several filter elements (2) vertically arranged in a filter housing (10) and each having an upper, open end (16) and a lower, closed end (15), at least one supply duct (9) for the dust-laden waste gases and at least one discharge duct (11) for the cleaned waste gases as well as a means (4) for blowing compressed-air blasts of a duration of less than 300 ms into the open ends (6) of the filter elements (2), **characterised in that** the filter is subdivided into several filter modules (1) each comprising at least one filter element (2), wherein at least two filter modules (1) are arranged in a filter housing (10) or filter chamber, said filter modules (1) being alternately dedusted, and that each of said filter modules (1) is associated with a clean-gas discharge duct (11), in which discharge duct (11) a shutoff means (3) is provided for the interruption of the clean-gas discharge duct (11), and that a device (19) for controlling the shutoff means (3) is further provided so as to effect in a diametrically opposed manner, during a change-over of the filter modules to be dedusted, the opening of the shutoff means (3) of the already dedusted filter module (1) and the closure of the shutoff means (3) of the filter module (3) to be dedusted, thus enabling the minimization of any possible pressure fluctuations in the filter, wherein the means (4) for blowing the compressed- air blasts is designed with a compressed-air volume per dedusting impulse of 0.5 to 4 liters per m² of filter area.

7. The device according to claim 6, **characterised in that** each of said filter modules (1) is comprised of a chamber forming the clean-gas space (7) and including a connection to the clean-gas discharge duct (11) as well as a connection to the at least one filter element (2).

8. The device according to claims 6 or 7, **characterised in that** partition elements (12) are provided between the or some filter modules (1) arranged in the filter housing (10).

9. The device according to any one of claims 6 to 8, **characterised in that** at least one nozzle (5) oriented in the direction of the filter element (2) is arranged above the open end (16) of each filter element (2).

10. The device according to claim 9, **characterised in that** two nozzles (5) oriented in the direction of the filter element (2) are arranged eccentrically above the open end (16) of each filter element (2).

11. The device according to any one of claims 6 to 10, **characterised in that** an injector (6) is arranged in the open end (16) of each filter element (2).

12. The device according to claim 11, **characterised in that** the at least one nozzle (5) is arranged above the open end (16) of each filter element (2) at a distance from the entry opening of the injector (6).

13. The device according to any one of claims 6 to 12, **characterised in that** the at least one waste-gas supply duct (9) is arranged below the lower ends (15) of the filter elements (2) of the filter modules (1).

## Revendications

1. Procédé de nettoyages de filtres pour des gaz d'échappement chargés en poussière, comprenant plusieurs éléments filtrants disposés verticalement, avec une extrémité supérieure ouverte et une extrémité inférieure fermée, les gaz d'échappement s'écoulant depuis l'extérieur à travers les éléments filtrants et les gaz d'échappement épurés étant évacués par leurs extrémités ouvertes et, pour effectuer le nettoyage dans l'extrémité ouverte des éléments filtrants à nettoyer, des chocs d'air comprimé ayant une durée inférieure à 300 ms étant insufflés, **caractérisé en ce qu'**au moins un élément filtrant est respectivement disposé dans un module de filtre et qu'au moins deux modules de filtre sont disposés dans un boîtier ou une chambre à filtre, les modules de filtre étant nettoyés en alternance, les modules de filtre à nettoyer pendant le nettoyage étant placés en un état pratiquement sans écoulement, par le fait que, pendant le nettoyage, la dérivation des gaz épurés du module de filtre à nettoyer est interrompue et que, en cas de changement des modules de filtre à nettoyer, le raccordement du module de filtre nettoyé et le débranchement du module de filtre à nettoyer, dans l'écoulement de gaz, se font en même temps, d'éventuelles fluctuations de pression dans le filtre étant alors minimisées, et la consommation d'air comprimé utilisé pendant le nettoyage est de 0,5 à 4 litres par m² de surface de filtre.

2. Procédé selon la revendication 1, **caractérisé en ce que** des chocs d'air comprimé pour le nettoyage sont utilisés avec une pression en accumulateur ou en stockage de 0,5 à 3 bar, de préférence de 0,8 à 2 bar.

3. Procédé selon la revendication 1 ou 2, **caractérisé en ce que**, pour nettoyer chaque module de filtre, à chaque cycle de nettoyage est respectivement utilisé un choc d'air comprimé pour chaque élément filtrant du module de filtre.

4. Procédé selon l'une des revendications 1 à 3, **caractérisé en ce que** les chocs d'air comprimé sont dirigés dans la direction des éléments filtrants.

5. Procédé selon l'une des revendications 1 à 4, **caractérisé en ce que** le module de filtre à nettoyer est laissé à l'état pratiquement sans écoulement, pendant une période de temps déterminée après nettoyage.

6. Dispositif de nettoyage de filtres pour des gaz d'échappement chargés en poussière, suivant le procédé selon les revendications 1 à 5, comprenant une pluralité d'éléments filtrants (2), disposés verticalement dans un boîtier de filtre (10), avec une extrémité (16) supérieure ouverte et une extrémité inférieure (15) fermée, avec au moins une conduite d'amenée (9) pour les gaz d'échappement chargés en poussière et au moins une conduite d'évacuation (11) pour les gaz d'échappement épurés, ainsi qu'un dispositif (4) pour l'insufflation de chocs d'air comprimé ayant une durée inférieure à 300 ms dans l'extrémité ouverte (6) des éléments filtrants (2), **caractérisé en ce que** le filtre est subdivisé en plusieurs modules de filtre (1), ayant chacun au moins un élément filtrants (2), au moins deux modules de filtre (1) étant disposés dans un boîtier de filtre (10) ou une chambre à filtre, les modules de filtre (1) étant nettoyés en alternance et à chaque module de filtre (1) étant respectivement associée une conduite d'évacuation (11) pour les gaz épurés, conduite d'évacuation (11) dans laquelle un organe de coupure (3) est prévu pour interrompre l'évacuation (11) de gaz épuré, et **en ce qu'**en outre un dispositif (19) de commande des organes d'isolement (3) est prévu, de manière que, lors du changement des modules de filtre (1) à épurer, l'ouverture de l'organe de coupure (3) du module de filtre (1) déjà nettoyé et la fermeture de l'organe de coupure (3) du module de filtre (1) à épurer, aient lieu en même temps, d'éventuelles fluctuations de pression dans le filtre étant minimisées, et dans lequel le dispositif (4) est réalisé pour insuffler des chocs d'air avec un volume d'air comprimé par pulsion de nettoyage de 0,5 à 4 litres par m² de surface de filtre.

7. Dispositif selon la revendication 6, **caractérisé en ce que** chaque module de filtre (1) est formé d'une chambre, formant une enceinte de gaz pur (7), avec une liaison à l'évacuation (11) de gaz pur, ainsi qu'une liaison pour au moins un élément filtrant (2).

8. Dispositif selon la revendication 6 ou 7, **caractérisé en ce que**, entre les ou quelques-uns des modules de filtre (1) disposés dans le carter de filtre (10), sont disposés des éléments séparateurs (12).

9. Dispositif selon l'une des revendications 6 à 8, **caractérisé en ce que**, par l'intermédiaire de l'extrémité (16) ouverte de chaque élément filtrant (9), est disposée au moins une buse (5), orientée dans la direction de l'élément filtrant (2).

10. Dispositif selon la revendication 9, **caractérisé en ce que**, par l'intermédiaire de l'extrémité (16) ouverte de chaque élément filtrant (2), sont disposées de façon excentrée deux buses (5), orientées dans la direction de l'élément filtrant (2).

11. Dispositif selon l'une des revendications 6 à 10, **caractérisé en ce qu'**un injecteur (16) est disposé dans l'extrémité (16) ouverte de chaque élément filtrant (2).

12. Dispositif selon la revendication 11, **caractérisé en ce que** la au moins une buse (5), au-dessus de l'extrémité (16) ouverte de chaque élément filtrant (2), est espacée de l'ouverture d'entrée de l'injecteur (6).

13. Dispositif selon l'une des revendications 6 à 12, **caractérisé en ce que** la au moins une conduite d'amenée (9) pour les gaz d'échappement est disposée au-dessous de l'extrémité inférieure (15) des éléments filtrants (2) des modules de filtre (1).
